(19) Europäisches Patentamt
European Patent Office
Office européen des brevets

(11) **EP 4 061 149 B1**

(12) **FASCICULE DE BREVET EUROPEEN**

(45) Date de publication et mention
de la délivrance du brevet:
**10.06.2026 Bulletin 2026/24**

(21) Numéro de dépôt: **20820492.5**

(22) Date de dépôt: **19.11.2020**

(51) Classification Internationale des Brevets (IPC):
**A23L 11/00** (2025.01)    **C08B 30/00** (2006.01)

(52) Classification Coopérative des Brevets (CPC):
**A23L 11/00; A23L 29/212; C08B 30/00**

(86) Numéro de dépôt international:
**PCT/FR2020/052134**

(87) Numéro de publication internationale:
**WO 2021/099747 (27.05.2021 Gazette 2021/21)**

(54) **PROCEDE D'ANNEALING D'UN AMIDON DE LÉGUMINEUSE**

**VERFAHREN ANNEALING VON HÜLSENFRÜCHTENSTÄRKE**

**METHOD FOR ANNEALING A LEGUME STARCH**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2019 FR 1913099**
**14.02.2020 US 202062976508 P**

(43) Date de publication de la demande:
**28.09.2022 Bulletin 2022/39**

(73) Titulaire: **ROQUETTE FRERES**
**62136 Lestrem (FR)**

(72) Inventeurs:
• **PARCQ, Julien**
**59000 LILLE (FR)**
• **DUPONT, Alban**
**62350 CALONNE SUR LA LYS (FR)**
• **ALBERT, Marie**
**59700 MARCQ EN BAROEUL (FR)**
• **DESAILLY, Fabrice**
**62210 AVION (FR)**

(74) Mandataire: **Plasseraud IP**
**104 Rue de Richelieu**
**CS92104**
**75080 Paris Cedex 02 (FR)**

(56) Documents cités:
**CN-A- 103 194 508    CN-A- 104 544 473**
**CN-B- 101 117 352**

• **CHUNG H J ET AL: "Effect of single and dual hydrothermal treatments on the crystalline structure, thermal properties, and nutritional fractions of pea, lentil, and navy bean starches", FOOD RESEARCH INTERNATIONAL, ELSEVIER, AMSTERDAM, NL, vol. 43, no. 2, 1 March 2010 (2010-03-01), pages 501 - 508, XP026881635, ISSN: 0963-9969, [retrieved on 20090806], DOI: 10.1016/J.FOODRES.2009.07.030**
• **CHUNG H J ET AL: "Impact of annealing and heat-moisture treatment on rapidly digestible, slowly digestible and resistant starch levels in native and gelatinized corn, pea and lentil starches", CARBOHYDRATE POLYMERS, APPLIED SCIENCE PUBLISHERS, LTD. BARKING, GB, vol. 75, no. 3, 11 February 2009 (2009-02-11), pages 436 - 447, XP025782302, ISSN: 0144-8617, [retrieved on 20080814], DOI: 10.1016/J.CARBPOL.2008.08.006**

EP 4 061 149 B1

## Description

La présente invention est relative à un procédé hydrothermique d'augmentation de la teneur en fraction lentement digestible de l'amidon de pois.

## Contexte de l'invention

D'un point de vue physiologique, chez l'homme ou les animaux, l'essentiel des glucides ingérés lors de l'alimentation est représenté par l'amidon, molécule de réserve énergétique caractéristique des végétaux et composante principale des féculents (pâtes, farine, pommes de terre).

Lors de la digestion, les molécules d'amidon se dissocient en chaînes de glucanes linéaires, elles-mêmes dissociées en glucoses simples et assimilables par le système digestif.

La digestion de l'amidon débute dans la bouche pendant la mastication grâce à une enzyme de la salive : l'amylase salivaire.

Cette première décomposition de l'amidon est stoppée par l'acidité de l'estomac mais reprend dans le duodénum (première partie de l'intestin grêle) grâce à l'action des amylases pancréatique et intestinale.

L'action successive de toutes ces amylases conduit à l'apparition d'un diholoside, le maltose, qui sera lui-même transformé en deux sucres simples, des glucoses.

Synthétisé par voie biochimique, source d'hydrates de carbone, l'amidon est l'une des matières organiques les plus répandues du monde végétal, où il constitue la réserve nutritionnelle des organismes.

Il est ainsi naturellement présent dans les organes et tissus de réserve des végétaux supérieurs, en particulier dans les graines de céréales (blé, maïs...), les graines de légumineuses (pois, fèves ...), les tubercules de pomme de terre ou de manioc, les racines, les bulbes, les tiges et les fruits.

L'amidon est un mélange de deux homopolymères, l'amylose et l'amylopectine, composés d'unités de D-glucose, liées entre elles par des liaisons $\alpha$ (1-4) et des liaisons $\alpha$ (1-6) qui sont à l'origine de ramifications dans la structure de la molécule.

Ces deux homopolymères diffèrent par leur degré de branchement et leur degré de polymérisation.

L'amylose est légèrement ramifiée avec de courtes branches et présente une masse moléculaire comprise entre 10.000 et 1.000.000 Dalton. La molécule est formée de 600 à 1.000 molécules de glucose.

L'amylopectine est une molécule ramifiée avec de longues branches toutes les 24 à 30 unités de glucose, par l'intermédiaire de liaisons $\alpha$ (1-6). Sa masse moléculaire va de 1.000.000 à 100.000.000 Dalton et son niveau de branchement est de l'ordre de 5 %. La chaîne totale peut compter 10.000 à 100.000 unités glucose.

Le ratio entre l'amylose et l'amylopectine dépend de la source botanique de l'amidon.

L'amidon est stocké dans les organes et tissus de réserve dans un état granulaire, c'est-à-dire sous la forme de granules semi-cristallins.

Cet état semi-cristallin est essentiellement dû aux macromolécules d'amylopectine.

A l'état natif, les grains d'amidon présentent un taux de cristallinité allant de de 15 à 45% en poids qui dépend essentiellement de l'origine botanique et du procédé mis en œuvre pour leur extraction.

L'amidon granulaire, placé sous lumière polarisée, présente alors en microscopie une croix noire caractéristique, dite « croix de Malte ».

Ce phénomène de biréfringence positive est dû à l'organisation semi-cristalline des granules : l'orientation moyenne des chaînes de polymères étant radiale.

Pour une description plus détaillée de l'amidon granulaire, on pourra se référer au chapitre II intitulé « Structure et morphologie du grain d'amidon » de S. Perez, dans l'ouvrage « Initiation à la chimie et à la physico-chimie macromoléculaires », Première Edition, 2000, Volume 13, pages 41 à 86, Groupe Français d'Etudes et d'Applications des Polymères.

L'amidon sec renferme une teneur en eau qui varie de 12 à 20 % en poids selon l'origine botanique. Cette teneur en eau dépend évidemment de l'humidité résiduelle du milieu (pour une aw = 1, l'amidon peut fixer jusqu'à 0,5 g d'eau par gramme d'amidon).

Le chauffage, en excès d'eau, d'une suspension d'amidon à des températures proches de sa température de gélatinisation entraîne un gonflement irréversible des grains et conduit à leur dispersion, puis à leur solubilisation.

Ce sont notamment ces propriétés qui confèrent à l'amidon ses propriétés technologiques d'intérêt.

Pour une plage de température donnée appelée « plage de gélatinisation », le grain d'amidon va gonfler très rapidement et perdre sa structure semi-cristalline (perte de la biréfringence).

Tous les grains seront gonflés au maximum sur un intervalle de température de l'ordre de 5 à 10°C. On obtient un empois composé de grains gonflés qui constituent la phase dispersée et de molécules (amylose principalement) qui épaississent la phase continue aqueuse.

Les propriétés rhéologiques de l'empois dépendent de la proportion relative de ces deux phases et du volume de gonflement des grains. La plage de gélatinisation est variable selon l'origine botanique de l'amidon.

La viscosité maximale est obtenue quand l'empois d'amidon renferme un grand nombre de grains très gonflés. Quand on continue de chauffer, les grains vont éclater et le matériel va se disperser dans le milieu cependant la solubilisation n'interviendra que pour des températures supérieures à 100°C.

Les complexes amylose-lipide présentent des retards au gonflement car l'association empêche l'interaction de l'amylose avec les molécules d'eau et il faut des températures supérieures à 90°C pour obtenir le gonflement total des grains (cas de l'amylomaïs complexé aux lipides).

La disparition des grains et la solubilisation des macromolécules entraînent une diminution de la viscosité.

L'abaissement de température (par refroidissement) de l'empois d'amidon provoque une insolubilisation des macromolécules et une séparation des phases due à l'incompatibilité entre amylose et amylopectine puis on assiste à une cristallisation de ces macromolécules.

Ce phénomène est connu sous l'appellation de rétrogradation.

Quand un empois renferme de l'amylose, c'est cette première molécule qui subira la rétrogradation.

Elle consistera à la formation de double hélice et à l'association de ces dernières pour former des « cristaux » (type B) qui donneront par l'intermédiaire de zones de jonction un réseau tridimensionnel.

Ce réseau est formé très rapidement, en quelques heures. Au cours de l'élaboration de ce réseau, l'association des doubles hélices entre-elles par l'intermédiaire de liaisons pont hydrogène déplace les molécules d'eau associées aux hélices et provoque une synérèse importante.

La complexité structurale de l'amidon et ses propriétés physico-chimiques font que cette classe d'hydrates de carbone sera assimilée puis digérée de façon variable chez l'homme et les animaux.

C'est la raison pour laquelle l'amidon peut être classé en trois catégories, en fonction de sa digestibilité : rapidement digestible, lentement digestible, ou non digestible.

L'amidon qui se présente sous forme naturellement granulaire / semi cristalline, peut être converti en « amidon rapidement digestible » (acronyme anglosaxon « RDS » pour Rapid Digestible Starch) après exposition à la chaleur, la pression et/ou à l'humidité durant les processus alimentaires.

L'amidon lentement digestible (acronyme anglosaxon « SDS » pour Slow Digestible Starch) prend plus longtemps à être dégradé par les enzymes digestives en comparaison avec les RDS parce qu'il présente une structure encore cristalline, et parce qu'il est moins accessible aux enzymes de digestion.

La digestion de cette fraction SDS conduit à une libération modérée et régulière de glucose dans le sang. On parlera alors d'amidons présentant un faible indice glycémique (acronyme anglosaxon « low G.I. » pour low Glycemic Index ou faible indice glycémique).

Des aliments qui présentent un contenu élevé en SDS provoqueront alors des réponses glycémiques post prandiales plus faibles et des réponses insulinémiques plus basses que des aliments ne contenant qu'un faible contenu en SDS.

Inversement, les RDS sont des hydrates de carbones nutritifs, car ils libèreront leur glucose dans le sang beaucoup plus rapidement.

Quant aux amidons dits résistants (acronyme anglosaxon « RS » pour Resistant Starch), ils sont quant à eux assimilables à des fibres non digestibles (tels que le son de maïs, les fibres d'avoine, les gommes) par les enzymes intestinales.

Il est admis, dans l'état de l'art, que l'amidon total est la somme de ses trois composantes RDS, SDS et RS.

Les différents types d'amidon sont donc digérées à des rythmes différents dans le système digestif humain.

On admet donc que les SDS ont une vitesse de digestion plus lente que les RDS. Les RS sont une fraction de l'amidon qui résiste à la digestion enzymatique dans l'intestin grêle. Ces derniers seront fermentés dans le gros intestin et peuvent dès lors être considérés comme des fibres alimentaires.

Les fractions SDS et RS sont donc des sources de glucose disponible.

Les SDS sont trouvés naturellement dans certaines graines non cuites des céréales comme le blé, le riz, l'orge, le seigle, le maïs, dans les légumineuses comme le pois, les féveroles et les lentilles.

Le contenu en SDS est principalement influencé par la gélatinisation de l'amidon lors du procédé alimentaire qui suivra.

En effet, lors de ce processus, l'exposition à la température, la pression et l'humidité conduit à la conversion de la fraction SDS en RDS, rendant l'amidon plus accessible à la digestion enzymatique.

Cette conversion peut être minimisée par le contrôle des conditions de cuisson pour limiter la gélatinisation de l'amidon.

De ce fait, le contenu original en SDS dans la composition ou le produit alimentaire dépendra de la manière dont sa préparation aura été menée.

Il est ainsi connu que les produits alimentaires qui contiennent beaucoup de SDS sont certaines pâtes alimentaires, le riz étuvé, l'orge perlé et certains biscuits, contrairement aux céréales soufflées du petit déjeuner ou au pain qui n'en contiennent habituellement que très peu.

Le contenu en SDS des aliments est classiquement déterminé en utilisant une méthode *in vitro* développée par H.N. ENGLYST et ses collaborateurs (publiée en 1992 dans l'European Journal of Clinical Nutrition, volume 46, pp S33 -S50).

Dans la suite de cet exposé, il sera fait référence à cette méthode de 1992 « selon ENGLYST ».

Cette méthode a été élaborée pour simuler la digestion enzymatique qui se produit dans l'intestin grêle.

Un échantillon de produit ou d'amidon est introduit dans un tube, en présence d'enzymes digestives, et la libération du glucose est mesurée durant 120 minutes de réaction.

Cette méthode permet alors de différencier :

- La fraction RDS, par la mesure du glucose disponible rapidement (acronyme anglosaxon « RAG »), en l'occurrence ici mesure du glucose libéré entre 0 et 20 minutes ;
- La fraction SDS, par la mesure du glucose disponible lentement (acronyme anglosaxon « SAG ») ; en l'occurrence ici mesure du glucose libéré entre 20 et 120 minutes ;
- La fraction RS, correspondant au glucose non libéré après 120 minutes, qui se calcule selon la méthode Englyst par la formule suivante : TS - (RDS + SDS) où TS = amidon total (Total Starch considéré égal à 100 % lorsque les analyses sont réalisées sur l'amidon en tant que tel).

Des aliments riches en glucides contenant plus de 50 % en poids de carbohydrates disponibles provenant d'amidon, dont au moins 40 % en poids sont du SDS, sont classiquement considérés comme des aliments à haute richesse en SDS.

Ils sont donc préconisés pour limiter l'indice glycémique et la production d'insuline, en regard des aliments plus pauvre en SDS.

De tous les amidons classiquement mis en oeuvre dans ces applications alimentaires, les amidons de légumineuses, et plus particulièrement l'amidon de pois est un candidat de choix.

En effet, les graines de pois sont connues pour leur richesse en amidon (entre 55 et 70 % en poids de matière sèche) et pour leur faible indice glycémique (Ratnayake et al., 2002, Pea starch, composition, structure and properties - A review, in Starch/Stärke, 54, 217-234).

Les amidons de pois natifs, présentant une teneur en SDS classiquement comprises entre 27 et 38 % en poids selon ENGLYST sont donc d'intérêt pour des applications nutritionnelles.

Cependant, pour préparer des aliments à haute richesse en SDS, il est nécessaire de disposer d'amidon présentant une plus haute teneur en fraction glucidique lentement digestible.

Il est connu dans l'état de l'art que des traitements thermiques de type recuit (terme anglosaxon d'« annealing ») permettent d'altérer la structure cristalline du granule d'amidon.

Plus particulièrement, l'annealing est un terme utilisé en science des polymères pour décrire l'optimisation de la cristallisation par la cuisson d'un polymère à des températures en-dessous de leur point de fusion, afin que cela conduise à la croissance de régions cristallines, à la perfection des cristaux et au passage à des structures cristallines plus stables.

Lorsqu'il est appliqué à l'amidon, l'annealing est défini comme un processus hydrothermal impliquant le chauffage de granules d'amidon dans un excès d'eau à une température supérieure à la transition vitreuse mais inférieure à la température de gélatinisation initiale.

Au cours du processus d'annealing, on suppose que les granules d'amidon subissent un gonflement limité mais réversible sans détruire la structure granulaire et moléculaire ni la solubilisation des molécules des polymères d'amidon.

On considère généralement que le recuit est associé à la réorganisation des chaînes d'amidon et des doubles hélices d'amylopectine, ce qui entraîne des interactions accrues entre les chaînes d'amidon et un ordre entre les doubles hélices.

Le traitement d'annealing peut modifier de manière significative les propriétés physicochimiques des granules d'amidon, bien que les ordres cristallins et moléculaires des granules d'amidon soient peu affectés.

Les modifications physicochimiques impliquent généralement une diminution du pouvoir gonflant et de la solubilité (lixiviation de l'amylose), un rétrécissement de la plage de transition thermique avec une augmentation des températures de gélatinisation et des changements d'enthalpie, une augmentation de la stabilité de la colle et une susceptibilité aux digestions enzymatiques.

Certains événements moléculaires, tels que l'augmentation de la stabilité des granules, la réorganisation de la structure des granules ou l'abaissement de l'énergie libre, ont été proposés pour interpréter ces changements physico-chimiques survenant lors de l'annealing.

L'annealing de l'amidon a fait l'objet d'études approfondies avec les amidons de diverses sources botaniques, tels que le maïs, la pomme de terre, le blé, le riz, de sagou, de sorgho, l'orge et le pois.

L'amidon de pois a bien été évalué dans la mesure où il a une teneur en amylose supérieure à celle de nombreux autres amidons naturels et qu'il contient un mélange de structures polymorphes de types A et B.

Wang et al ont montré dans leur article de 2013 (publié dans la revue Food Bioprocess Technol, vol. 6, aux pages 3564-3575) que l'annealing altère légèrement la structure granulaire et cristalline des granules d'amidon de pois, mais en modifie considérablement la fonctionnalité.

Dans les conditions utilisées dans leur étude (la température d'annealing était bien inférieure à la température de gélatinisation - 4°C pendant 24 à 72 heures), l'annealing induit un léger gonflement irréversible des granules d'amidon de pois avec la lixiviation de certaines molécules d'amylose, bien que la cristallinité globale ne soit pas trop altérée.

Les auteurs en concluent que l'annealing agit principalement sur les régions amorphes des granules d'amidon avec peu d'effet sur les régions cristallines du granule d'amidon.

Cependant, ils montrent une transition polymorphe de type A vers le type B, ce qui a été attribué au remplissage d'espaces à double hélice dans les cristallites de type A avec davantage de molécules d'eau induites par le traitement hydrothermal.

L'élimination de certaines molécules d'amylose entre des grappes d'amylopectine conduit alors à l'affaiblissement de la stabilité globale des granules d'amidon, entraînant ainsi des modifications importantes des propriétés fonctionnelles des amidons recuits.

Quant à l'évolution de la digestibilité des amidons de pois recuits, les auteurs ont montré, en utilisant la méthode ENGLYST (1992) que le pourcentage d'hydrolyse enzymatique d'amidons de pois augmentait progressivement avec le temps au cours d'une incubation de 4 h.

Ils montrent ainsi que leur traitement d'annealing augmente la digestibilité in *vitro* des granules d'amidon de pois.

Ils concluent que le traitement d'annealing entraîne des teneurs en RDS plus élevées par réduction des teneurs en RS en SDS puis en RDS.

Ce constat est d'ailleurs admis par d'autres auteurs, les procédés d'annealing classiquement mis en œuvre dans l'état de l'art ayant donc pour objectif principal de rendre plus digestible l'amidon de légumineuses, et notamment le pois Cependant, allant à l'encontre de ce préjugé technique, la société Demanderesse a choisi d'optimiser cette technologie d'annealing, non pas pour augmenter la fraction RDS, mais pour augmenter le contenu en SDS de l'amidon de légumineuse, notamment du pois, en cherchant et trouvant des conditions opératoires d'annealing particulièrement adaptées à cette fin.

Par ailleurs, CN 104 544 473 A divulgue une méthode de modification biologique pour inhiber la rétrogradation de l'amidon comprenant un traitement par une enzyme de ramification de l'amidon de l'amidon.

CN 203 194 508 A divulgue une méthode de préparation d'amidon lentement digestible par un traitement enzymatique double sous pression et en collaboration avec la chaleur.

CN 101 117 352 B divulgue une méthode de production d'un amidon lentement digestible stable à haute température comprenant un traitement complexe de déramification par ajout de diastase, de pullanase et d'alpha-amylase.

**Description détaillée**

Ainsi, l'invention concerne un procédé de préparation d'un amidon de légumineuse tel que défini dans le jeu de revendications joint, de préférence de l'amidon de pois, à haute teneur en fraction lentement digestible (SDS), procédé de traitement hydrothermique caractérisé en ce qu'il comprend les étapes suivantes :

1) Préparer un lait d'amidon à une matière sèche comprise entre 30 et 40 % en poids, de préférence 32 % en poids,
2) Chauffer le lait d'amidon ainsi préparé à une température de 10 à 15°C en dessous de sa température de gélatinisation,
3) Maintenir sous agitation le lait d'amidon ainsi obtenu à cette température pendant une durée comprise entre 45 minutes et 7 heures, de préférence entre 1 heure et 6 heures,
4) Récupérer, filtrer et sécher le lait d'amidon ainsi traité.

Par « haute teneur en fraction lentement digestible », au sens de la présente invention, on entend une augmentation de la teneur en SDS de 10 à 20 % en poids, de préférence 12 à 17 % en poids par rapport à la teneur en poids en SDS de l'amidon à partir duquel il est préparé.

Par « légumineuse » au sens de la présente invention, on entend toute plante appartenant aux familles des césalpiniacées, des mimosacées ou des papilionacées et notamment toute plante appartenant à la famille des papilionacées comme, par exemple, le pois, le haricot, la fève, la fèverole, la lentille, la luzerne, le trèfle ou le lupin.

L'article de R. HOOVER et al. intitulé Composition, structure, functionality and chemical modification of legume starches : a review, publié dans Can. J. Physiol. Pharmacol. 1991,69 pp. 79-92) décrit notamment dans ses tableaux différentes légumineuses.

De préférence, la légumineuse est choisie dans le groupe comprenant le pois, le haricot, la fève et la fèverole.

Avantageusement, il s'agit de pois, le terme « pois » étant ici considéré dans son acception la plus large et incluant en particulier :

**EP 4 061 149 B1**

- toutes les variétés sauvages de « pois lisse » (« smooth pea »), et
- toutes les variétés mutantes de « pois lisse » et de « pois ridé » (« wrinkled pea ») et ce, quelles que soient les utilisations auxquelles on destine généralement lesdites variétés (alimentation humaine, nutrition animale et/ou autres utilisations).

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Selon une autre variante avantageuse, les légumineuses (par exemple des variétés de pois ou de féverole) sont des plantes donnant des graines contenant au moins 25 %, de préférence au moins 40 %, en poids d'amidon (sec/sec).

Par « amidon de légumineuse », on entend toute composition extraite et ce, de quelque manière que ce soit, d'une légumineuse et notamment d'une papilionacée, et dont la teneur en amidon est supérieure à 40 %, de préférence supérieure à 50 % et encore plus préférentiellement supérieure à 75 %, ces pourcentages étant exprimés en poids sec par rapport aux poids sec de ladite composition.

Avantageusement, cette teneur en amidon est supérieure à 90 % (sec/sec). Elle peut en particulier être supérieure à 95 % en poids, y compris supérieure à 98 % en poids.

Par amidon « natif », on entend un amidon qui n'a subi aucune modification chimique ou enzymatique. De manière préférée, l'amidon selon l'invention est un amidon natif.

Le procédé de l'invention ne comprend pas d'étape de traitement enzymatique des amidons.

Afin de déterminer leur teneur de base en fraction SDS, les amidons de pois selon l'invention ou non sont analysés suivant les conditions opératoires de digestion *in vitro* de la méthode de H. N. Englyst et al in « Classification and measurement of nutritionally important starch fractions », Eur. J. Clin. Nutr. , 46 (Supp. 2), S33-S50 (1992).

La méthode consiste à mesurer les fractions d'amidon rapidement digestible (RDS), lentement digestible (SDS) et non digestible (résistants) (RS) contenues dans un aliment.

Ces fractions sont déterminées après digestion enzymatique avec de la pancréatine, de l'amyloglucosidase et de l'invertase.

Le glucose libéré est mesuré par colorimétrie, en utilisant un kit de glucose oxydase Glucose GOD FS référencé 1 2500 99 10 923, commercialisé par la société DiaSys Distribution France Sarl en suivant le protocole dudit kit.

Le détail de la méthode mise en œuvre pour la mesure de la digestion selon Englyst est le suivant.

*Les réactifs utilisés* :

- Acétate de sodium anhydre (réf : 71184, de la société SIGMA)
- Acide benzoïque (réf : 242381, de la société SIGMA)
- $CaCl_2$ (réf : 1.02378.0500, de la société MERCK)
- Acide acétique 0,1M (réf : 33209, de la société SIGMA)
- Pancréatine de porc 8 x USP (réf : P 7545 de la société SIGMA)
- Amyloglucosidase EC 3.2.1.3 (de la société SIGMA, d'activité $\geq$260 U/ml / $\approx$ 300 AGU/ml, Cat. NO. A7095)
- Invertase EC 3.2.1.26 (de la société SIMA , d'activité $\geq$300 units/mg solid, Cat. NO. I-4504)
- Guar (réf : G4129, de la société SIGMA)
- Ethanol à 66°

**Mode opératoire**

*Préparation de la solution d'acide benzoïque saturée*

Peser 4 g d'acide benzoïque dans 1l d'eau osmosée puis mélanger. La solution peut être conservée à température ambiante pendant 1 mois.

*Préparation solution de $CaCl_2$ 1M/L.*

Peser 1,1098 g de $CaCl_2$ dans 10 ml d'eau osmosée puis mélanger. La solution peut être conservée à température ambiante pendant 1 mois.

*Préparation tampon acétate à 0,1M - pH 5,2.*

- Peser 8,203 g d'acétate de sodium anhydre dans 250 ml de solution d'acide benzoïque saturée,
- Ajouter 500 ml d'eau osmosée puis mélanger,
- Ajuster le pH à 5.2 +/- 0.5 avec de l'acide acétique à 0.1 M,
- Compléter avec de l'eau osmosée à 1000 ml dans une fiole jaugée,
- Ajouter 4 ml de la solution de $CaCl_2$ à 1 M pour 1 L de tampon préparé,
- Mélanger et vérifier le pH.

La solution peut être conservée à 4°C pendant 1 mois.

*Préparation de la solution de gomme de Guar dans la solution tampon d'acétate*

- Peser précisément 750 mg de gomme de Guar dans 300 ml de tampon acétate
- Mettre sous agitation en continu

PREPARATION DES ECHANTILLONS A ANALYSER ET DES ENZYMES MISES EN ŒUVRE

*Préparation des échantillons*

Peser précisément 0,8 g d'amidon sec à tester,
Ajouter 20 ml de solution tampon d'acétate 0,1M - pH 5,2 + gomme de Guar, Placer les flacons au bain marie pendant 15 minutes sous agitation à 37°C, Prélever 0,1 ml de la solution obtenue à T=0 minute puis ajouter 0,9 ml d'éthanol à 66° (soit une dilution au $1/10^{ème}$),
Dosage du glucose (en %) par colorimétrie au temps T=0 min.

Un blanc et un standard (Peser 0,5 g de dextrose anhydre) sont réalisés dans les mêmes conditions que la préparation des échantillons.

*Préparation du cocktail enzymatique*

Le cocktail enzymatique est prévu pour tester 12 échantillons. Il doit être préparé le jour même selon les protocoles suivants.

*Préparation de la pancréatine de porc 8 x USP*

Préparer 4 solutions de pancréatine afin d'obtenir 54 ml de surnageant.
Pour cela :

- Peser 2,5 g de pancréatine de porc 8 x USP,
- Ajouter 20 ml d'eau osmosée puis mélanger pendant 10 minutes,
- Centrifuger la solution à 1500G pendant 10 minutes,
- Récupérer 13,5 ml de surnageant.

*Préparation de l'amyloglucosidase*

- Diluer 3,7 ml d'une solution d'amyloglucosidase EC 3.2.1.3 avec 4,3 ml d'eau osmosée puis mélanger pendant 10 minutes,
- Prélever 6ml de la nouvelle solution puis l'ajouter avec les 54 ml de surnageant pancréatique puis mélange,

*Préparation de l'invertase*

- Peser 50 mg d'invertase EC 3.2.1.26,
- Ajouter 6 ml d'eau osmosée puis mélanger pendant 10 minutes,
- Prélever 4ml de la solution puis l'ajouter avec les 54 ml de surnageant pancréatique puis mélanger.

PROTOCOLE DE DIGESTION

- Ajouter 5 ml de cocktail enzymatique dans les préparations des échantillons
- Incuber pendant 120 minutes à 37°C au bain thermostaté sous agitation,
- Prélever 0,1 ml de la solution obtenue à T=20 min et à T= 120 min puis les ajouter à 0,9 ml d'éthanol à 66° (soit une dilution au 1/10ème),
- Mélanger puis centrifuger les échantillons à 1500G pendant 3 minutes,
- Dosage du glucose (en %) par colorimétrie aux temps T=20min et T=120min

Détermination Du Taux De Glucose Libre (Fg) Et Du Taux De Glucose Total (Tg)
Le taux du glucose libre (FG) correspond à la mesure effectuée au temps 0min.
Le taux de glucose total (TG) est mesuré de la manière suivante :

- Prélever 0,25 ml de la solution obtenue à T=120 min dans un tube type « Eppendorf »,
- Ajouter 0.25 ml d'acide chlorhydrique 4N, mélanger,
- Placer le tube dans un bain-marie à sec à 100°C pendant 45 minutes, laisser refroidir à température ambiante,
- Neutraliser la solution hydrolysée avec 0.25 ml de soude 4N,
- Ajouter 0,25 ml d'eau osmosée, mélanger
- Réaliser une dilution au 1/10ème dans de l'eau osmosée, (0,1 ml dans 0,9 ml). Soit une dilution finale au 1/40ème.

DETERMINATION DU TAUX EN RDS, SDS ET DU RS

Détermination du glucose libéré aux temps :

- T=0min (teneur en glucose initiale),
- T=20min (teneur en glucose libéré après 20 minutes) et
- T=120min (teneur en glucose libéré après 120 minutes).

Selon la méthode Englyst :

$$Glucose\ (\%) = \frac{At \times Vt \times C \times D}{As \times Wt} \times 100$$

Où

- At = Absorbance (échantillon) - Absorbance (blanc)
- Vt = Volume total (échantillon en ml)
- C = Concentration du standard (glucose en mg/ml)
- D = Facteur de dilution
- As = Absorbance (standard) - Absorbance (blanc)
- Wt = Poids sec (échantillon en mg)

Où

- At = Absorbance (échantillon) - Absorbance (blanc)
- Vt = Volume total (échantillon en ml)
- C = Concentration du standard (glucose en mg/ml)

- D = Facteur de dilution
- As = Absorbance (standard) - Absorbance (blanc)
- Wt = Poids sec (échantillon en mg)

La détermination des fractions RDS, SDS et du RS est réalisée comme suit :

$$RDS = (G20 - FG) \times 0,9$$

$$SDS = (G120 - G20) \times 0,9$$

$$RS = ((TG - FG) \times 0,9) - (RDS + SDS)$$

Selon cette méthode, l'amidon de pois natif présente classiquement une teneur en RDS comprise entre 13 et 16 % en poids, une teneur en SDS comprise entre 27 et 38 %, et une teneur en RS comprise entre 45 et 56% en poids. Ces valeurs sont données avec un écart type de +/- 2%, étant donné la variabilité intrinsèque au test enzymatique Englyst.

Pour augmenter le taux de SDS, le procédé d'annealing selon l'invention, développé par la société Demanderesse, repose sur une conduite hydrothermique précise.

L'invention est alors relative à un procédé de préparation d'un amidon de légumineuse tel que défini dans le jeu de revendications joint, de préférence de l'amidon de pois, à haute teneur en fraction lentement digestible (SDS), procédé de traitement hydrothermique caractérisé en ce qu'il comprend les étapes suivantes :

1) Préparer un lait d'amidon à une matière sèche comprise entre 30 et 40 % en poids, de préférence 32 % en poids,
2) Chauffer le lait d'amidon ainsi préparé à une température de 10 à 15°C en dessous de sa température de gélatinisation,
3) Maintenir sous agitation le lait d'amidon ainsi obtenu à cette température pendant une durée comprise entre 45 minutes et 7 heures, de préférence entre 1 heure et 6 heures,
4) Récupérer, filtrer et sécher le lait d'amidon ainsi traité.

La première étape dudit procédé conforme à l'invention consiste à préparer un lait d'amidon de légumineuse, en l'occurrence de pois, à une matière sèche comprise entre 30 et 40 % en poids, de préférence 32% en poids.

La seconde étape du procédé conforme à l'invention consiste à chauffer le lait d'amidon de légumineuse à une température de 10 à 15°C en dessous de sa température de gélatinisation, en l'occurrence ici pour l'amidon de pois, à une température comprise entre 48 et 53°C, de préférence à une température de l'ordre de 50°C.

La société Demanderesse recommande de mettre en œuvre un échangeur thermique dont la température n'excède pas 55°C. Selon un mode de réalisation de l'invention, le procédé ne comprend pas d'étape de gélatinisation, c'est-à-dire que le lait d'amidon n'est jamais soumis à une température supérieure ou égale à la température inférieure de la « plage de gélatinisation ».

La troisième étape du procédé conforme à l'invention consiste à maintenir le lait d'amidon à ladite température, sous agitation, pendant une durée comprise entre 45 minutes et 7 heures, de préférence pendant une durée comprise entre 1 h et 6 heures, de manière encore plus préférée 1 heure.

L'agitation du milieu réactionnel est ajustée de sorte de maintenir l'amidon en suspension dans le milieu réactionnel. Ceci peut être obtenu par une agitation de type mécanique en utilisant un mobile d'agitation de type ancre, hélice ou turbine.

La société Demanderesse a ainsi trouvé que contrairement à ce qui est recommandé dans l'état de l'art précité, il ne faut pas avoir recours à une conduite d'annealing, sur un amidon à haute matière sèche (il est décrit jusqu'à 60 % en poids de MS) à une température de 10 à 15°C en dessous de la température de gélatinisation de l'amidon pendant 24 à 72 heures, mais de préférer des temps courts (pas plus de 6 heures) sur un amidon de relativement faible matière sèche (de l'ordre de 30 % en poids).

C'est par cette conduite qu'il sera possible d'augmenter le taux de SDS de l'amidon traité.

La quatrième et dernière étape du procédé conforme à l'invention consiste alors en la récupération, la filtration et le séchage du lait d'amidon ainsi traité, tel qu'exemplifié ci-après.

La teneur en humidité résiduelle de l'amidon sec obtenu est comprise entre 10 et 15 % en poids, de l'ordre de 13 % en poids.

La mesure Englyst de digestibilité de ces produits donne des valeurs en SDS augmentées de 10 à 20 % en poids, de préférence 12 à 17 % en poids par apport à l'amidon de départ.

Comme il sera exemplifié ci-après, cette valeur en SDS pour l'amidon de pois est de plus de 40 % en poids, de préférence comprise entre 40 et 50 % en poids.

Ces amidons à haute teneur en SDS seront alors avantageusement mis en œuvre dans les domaines d'applications alimentaires (destinés notamment aux sportifs) ou médicale (nutrition spécialisée).

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### Exemple 1 : Détermination des conditions d'annealing d'amidon de pois les plus efficaces

Au laboratoire, un lait d'amidon de pois dans de l'eau à 32 % en poids de matière sèche est préparé en introduisant un amidon de pois natif commercialisé par la société Demanderesse sous le libellé commercial N735 dans de l'eau déminéralisée à température ambiante et sous agitation douce.

La température de ce lait est augmentée à une valeur variant de 50°C à 95°C (50°C, 60°C, 65°C, 68°C, 70°C et 80°C) pour étudier l'impact du traitement thermique sur la teneur en SDS obtenue.

Le mélange réactionnel est maintenu sous agitation pendant 1 heure à cette température finale.

Au terme de cette période, le lait d'amidon est récupéré, filtré à travers un filtre en verre fritté, puis séché. Il présente alors une humidité résiduelle de l'ordre de 13 % en poids

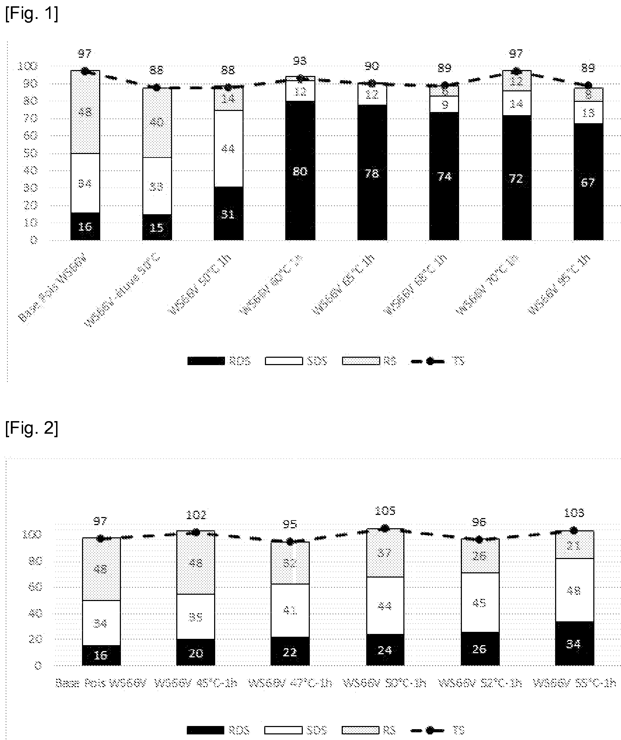

[Fig. 1] La figure 1 présente le profil de digestibilité Englyst (1992), déterminé auxdites températures.

On observe que le traitement avec une température d'annealing à une valeur ≥ 60°C conduit à augmenter la teneur en fraction RDS, concomitant au début du processus de gélatinisation de l'amidon.

Le traitement à 50°C conduit à une augmentation de la teneur en SDS de la valeur de 33 % en poids pour l'amidon de pois natif, à une valeur de 44 % en poids pour l'amidon traité hydro- thermiquement, ce qui traduit donc bien une augmentation remarquable de 11 % en poids.

La quantité d'eau joue un rôle important, et il est confirmé que l'absence d'eau ne modifie en rien le profil de digestibilité de l'amidon de pois.

Des analyses de DSC sont également réalisées sur les produits des réactions d'annealing à ces différentes températures.

[Tableau 1]

| Echantillon **Amidon Pois** | type traitement **sans** | humidité % en poids 11,9 | t°Onset 62,5 | t°PIC 70 | t°max 77,1 | Enthalpie 2,5 |
|---|---|---|---|---|---|---|
| Amidon Pois natif (étuve 50°C) | étuve | 12,4 | 62,5 | 70,1 | 77,3 | 2,5 |
| 50°C - 1 h | Annealing | 9,0 | 67,9 | 72 | 76,8 | 2,5 |
| 60°C - 1 h | Annealing | 9,8 | 75,2 | 78,1 | 81,4 | 1,8 |
| 65°C - 1 h | Annealing | 5,1 | 76,8 | 80,7 | 84,3 | 1 |
| 68°C - 1 h | Annealing | 4,3 | NA | NA | NA | NA |
| 70°C - 1 h | Annealing | 4,7 | 48,5 | 59,8 | 80 | 1,1 |
| 95°C - 1 h | Annealing | 6,1 | 51,3 | 63,2 | 72,5 | 1,1 |

Aucun changement n'est observé en absence d'eau (témoin étuve à 50°C).

Le traitement d'annealing montre que le traitement à 50°C pendant 1 heure est le plus efficace, avec une augmentation de la température d'Onset d'environ 5°C après seulement 1 heure de traitement, une augmentation légère de la t° du pic de +2°C, et pratiquement pas d'évolution de la t°max.

Le traitement hydrothermique est donc rapidement actif sur l'amidon de pois traité en phase lait.

### Exemple 2 : Optimisation de l'augmentation de la teneur en SDS en contrôlant la fraction RDS à une valeur inférieure à 35 % en poids.

Le procédé d'annealing est conservé tel que décrit précédemment. La température est affinée par rapport à celle présentée dans la figure 1 de sorte d'affiner la plage comprise entre -50 et 60°C.

[Fig. 2] La figure 2 présente les profils de digestibilité Englyst obtenus à différentes températures.

Nous observons par cette expérience qu'il est possible d'augmenter de manière substantielle la fraction en SDS tout en contrôlant la fraction RDS < 35% en poids en jouant sur la température du traitement d'Annealing.

Ainsi on observe qu'une température de 50°C est un compromis idéal pour la maîtrise du procédé tout en permettant d'atteindre la cible visée

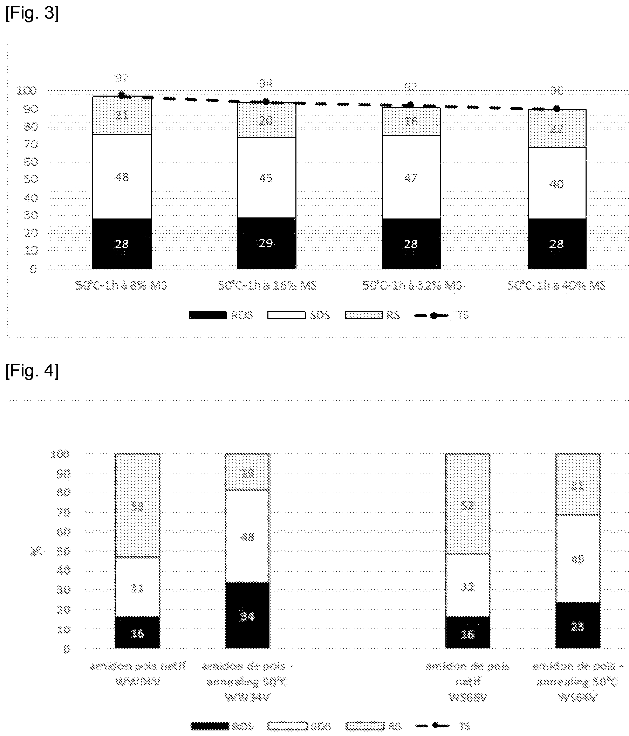

[Fig. 3] La Figure 3 présente les profils de digestibilité Englyst obtenus à différente matière sèche.

Il est observé que l'augmentation de la quantité de matière sèche à des valeurs substantielles réduisait la capacité à produire une fraction de SDS plus élevée.

La température d'annealing est fixée à 50°C, comme enseigné ci-avant.

Le tableau 2 ci-dessous donne les teneurs en pourcentages en poids en RDS, SDS, RS et TS calculés selon la méthode ENGLYST.

[Tableau 2]

| Point de cinétique | MS (%) | RDS | SDS | RS | TS (total) |
|---|---|---|---|---|---|
| 20min H$_2$O 10.6% | 89,4 | 17 | 41 | 41 | 99 |
| 40min H$_2$O 10.1% | 89,9 | 16 | 41 | 35 | 93 |
| 1h H$_2$O 11.0% | 89,0 | 20 | 42 | 38 | 100 |
| 2h H$_2$O 10.3% | 89,7 | 19 | 46 | 32 | 96 |
| 3h H$_2$O 10.2% | 89,8 | 23 | 39 | 39 | 101 |
| 4h H$_2$O 11.0% | 89,0 | 18 | 41 | 47 | 106 |
| 6h H$_2$O 11.2% | 88,8 | 19 | 40 | 44 | 104 |
| 24h H$_2$O 10.5% | 89,5 | 20 | 43 | 37 | 100 |
| 48h H$_2$O 15.7% | 84,3 | 18 | 39 | 40 | 97 |

On observe que même après 20 minutes de traitement d'annealing, le profil de digestibilité de l'amidon de pois évolue.

Le meilleur équilibre est trouvé entre 1 et 6 h de traitement d'annealing.

En mettant en œuvre ce procédé nous sommes en mesure comme présenté ci-dessous au travers de 2 lots d'amidon de pois natif, d'augmenter significativement la fraction SDS (+10 à 15% en poids) tout en contrôlant l'augmentation de fraction RDS (< 35% en poids).

[Fig 4] La figure 4 présente cette augmentation significative de la fraction SDS tout en contrôlant l'augmentation de fraction RDS.

**Revendications**

**1.** Procédé de préparation d'un amidon de légumineuse, **caractérisé en ce qu'**il comprend les étapes suivantes :

1) Préparer un lait d'amidon à une matière sèche comprise entre 30 et 40 % en poids, de préférence 32 % en poids,
2) Chauffer le lait d'amidon ainsi préparé à une température de 10 à 15°C en dessous de sa température de gélatinisation,
3) Maintenir sous agitation le lait d'amidon ainsi obtenu à cette température pendant une durée comprise entre 45 minutes et 6 heures,
4) Récupérer, filtrer et sécher le lait d'amidon ainsi traité,

ledit procédé ne comprenant pas d'étape de traitement enzymatique de l'amidon.

**2.** Procédé selon la revendication 1, **caractérisé en ce que** l'amidon de légumineuse est choisi dans le groupe des amidons le pois, de haricot, de fève, de féverole, de lentille, de luzerne, de trèfle et de lupin, et est particulièrement l'amidon de pois.

**3.** Procédé selon l'une ou l'autre des revendications 1 et 2, **caractérisé en ce que** la teneur en fraction lentement digestible (SDS) est augmentée de 10 à 20 % en poids, de préférence 12 à 17 % en poids par apport à la teneur en poids en SDS de l'amidon de départ, dans lequel la teneur en poids en SDS est déterminée en utilisant la méthode in vitro développée par H.N ENGLYST et ses collaborateurs (publiée en 1992 dans l'*European Journal of Clinical Nutrition,* volume 46, pp S33 -S50).

**4.** Procédé selon l'une quelconque des revendications précédente, **caractérisé en ce que** pour l'amidon de pois, on chauffe le lait d'amidon à une température comprise entre 48 et 53°C, de préférence à une température de l'ordre de 50°C.

**5.** Procédé selon la revendication 4, **caractérisé en ce que** le lait d'amidon de pois est maintenu à cette température pendant une durée de 1 h à 6 h, de préférence 1 heure.

**Patentansprüche**

**1.** Verfahren zur Herstellung einer Hülsenfruchtstärke, **dadurch gekennzeichnet, dass** es die folgenden Schritte umfasst:

1) Herstellen einer Stärkemilch mit einem Trockensubstanzgehalt zwischen 30 und 40 Gew.- %, bevorzugt 32 Gew.-%,
2) Erhitzen der so hergestellten Stärkemilch auf eine Temperatur von 10 bis 15 °C unterhalb ihrer Gelatinierungstemperatur,
3) Ständiges Rühren der so erhaltenen Stärkemilch bei dieser Temperatur für einen Zeitraum von 45 Minuten bis 6 Stunden,
4) Gewinnen, Filtern und Trocknen der so behandelten Stärkemilch,

wobei das Verfahren keinen Schritt der enzymatischen Behandlung der Stärke umfasst.

**2.** Verfahren nach Anspruch 1, **dadurch gekennzeichnet, dass** die Hülsenfruchtstärke gewählt ist aus der Gruppe der Erbsen-, Bohnen-, Ackerbohnen-, Acker-Lupinen-, Linsen-, Luzerne-, Klee- und Lupinenstärken und insbesondere Erbsenstärke ist.

**3.** Verfahren nach einem der Ansprüche 1 und 2, **dadurch gekennzeichnet, dass** der Gehalt an langsam verdaulicher Fraktion (SDS) um 10 bis 20 Gew.-%, bevorzugt um 12 bis 17 Gew.-%, gegenüber dem SDS-Gehalt der Ausgangsstärke erhöht wird, wobei der Gewichtsanteil an SDS unter Verwendung der von H.N. ENGLYST und seinen Mitarbeitern entwickelten In-vitro-Methode bestimmt wird (veröffentlicht 1992 im European Journal of Clinical Nutrition, Band 46, S. 33-50).

**4.** Verfahren nach einem der vorstehenden Ansprüche, **dadurch gekennzeichnet, dass** bei Erbsenstärke die Stärkemilch auf eine Temperatur zwischen 48 und 53 °C, bevorzugt auf eine Temperatur in der Größenordnung von 50 °C, erhitzt wird.

**5.** Verfahren nach Anspruch 4, **dadurch gekennzeichnet, dass** die Erbsenstärkemilch für einen Zeitraum von 1 bis 6 Stunden, bevorzugt für 1 Stunde, auf dieser Temperatur gehalten wird.

**Claims**

**1.** A method for preparing a legume starch, **characterised in that** it comprises the following steps of:

1) Preparing a starch milk with a dry matter content of between 30 and 40 wt.%, preferably 32 wt.%,
2) Heating the starch milk thus prepared to a temperature of 10 to 15°C below its gelatinisation temperature,
3) Keeping the starch milk thus obtained at this temperature under stirring for a period of time of between 45 minutes and 6 hours,
4) Recovering, filtering and drying the starch milk thus treated,

said method not comprising a step of enzymatically treating the starch.

**2.** The method according to claim 1, **characterised in that** the legume starch is selected from the group of starches of pea, bean, broad bean, field bean, lentils, alfalfa, clover and lupin, and is particularly pea starch.

**3.** The method according to any one of claims 1 and 2, **characterised in that** the Slowly Digestible Starch (SDS) fraction content is increased from 10 to 20 wt.%, preferably from 12 to 17 wt.% with respect to the SDS weight content of the starting starch, wherein the SDS weight content is determined using the in vitro method developed by H.N ENGLYST and collaborators (published in 1992 in the *European Journal of Clinical Nutrition,* volume 46, pp S33 -S50).

4. The method according to any one of the preceding claims, **characterised in that** for pea starch, the starch milk is heated to a temperature between 48 and 53°C, preferably to a temperature in the range of 50°C.

5. The method according to claim 4, **characterised in that** the pea starch milk is maintained at this temperature for a period of time of 1 h to 6 h, preferably 1 hour.

[Fig. 1]

[Fig. 2]

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CN 104544473 A
- CN 203194508 A

- CN 101117352 B

### Littérature non-brevet citée dans la description

- Structure et morphologie du grain d'amidon. **DE S. PEREZ**. Initiation à la chimie et à la physico-chimie macromoléculaires. 2000, vol. 13, 41-86
- *l'European Journal of Clinical Nutrition*, 1992, vol. 46, S33-S50
- **RATNAYAKE et al.** Pea starch, composition, structure and properties - A review,. *Starch/Stärke*, 2002, vol. 54, 217-234
- **WANG et al.** *Food Bioprocess Technol*, vol. 6, 3564-3575

- **R. HOOVER et al.** Composition, structure, functionality and chemical modification of legume starches : a review. *Can. J. Physiol. Pharmacol.*, 1991, vol. 69, 79-92
- **C-L HEYDLEY et al.** Developing novel pea starches. *Proceedings of the Symposium of the Industrial Biochemistry and Biotechnology Group of the Biochemical Society*, 1996, 77-87
- **H. N. ENGLYST et al.** Classification and measurement of nutritionally important starch fractions. *Eur. J. Clin. Nutr.*, 1992, vol. 46 (2), S33-S50